Europäisches Patentamt

European Patent Office

Office européen des brevets

(19)

(11) Veröffentlichungsnummer: **0 108 072**
**B1**

(12) # EUROPÄISCHE PATENTSCHRIFT

(45) Veröffentlichungstag der Patentschrift:
05.02.86

(21) Anmeldenummer: **83900922.2**

(22) Anmeldetag: **22.03.83**

(86) Internationale Anmeldenummer:
**PCT/EP 83/00081**

(87) Internationale Veröffentlichungsnummer:
**WO 83/03456 (13.10.83 Gazette 83/24)**

(51) Int. Cl.⁴: **F 16 L 33/02**

(54) **SCHLAUCHSCHELLE.**

(30) Priorität: **22.03.82 DE 3210437**

(43) Veröffentlichungstag der Anmeldung:
**16.05.84 Patentblatt 84/20**

(45) Bekanntmachung des Hinweises auf die Patenterteilung:
**05.02.86 Patentblatt 86/6**

(84) Benannte Vertragsstaaten:
**CH DE FR GB LI SE**

(56) Entgegenhaltungen:
**DE - A - 1 425 424**
**GB - A - 1 560 606**
**US - A - 2 285 850**

(73) Patentinhaber: **HORCHER, Willi, Hainstrasse 7,
D-6369 Schöneck 1 (DE)**

(72) Erfinder: **HORCHER geb. KLÖSS, Heide, Hainstrasse 7,
D-6369 Schöneck 1 (DE)**

(74) Vertreter: **Stoffregen, Hans-Herbert, Dr. Dipl.-Phys. et al,
Patentanwälte Strasse & Stoffregen Salzstrasse 11a
Postfach 2144, D-6450 Hanau/Main 1 (DE)**

## Beschreibung

Die Erfindung bezieht sich auf eine offene Schlauchschelle, die mittels eines die Spannkraft überwindenden Werkzeuges in ihre Wirkposition bringbar ist und die zur Erzielung eines auf den durch die Andruck innenfläche der Schlauchschelle definierten Abdichtbezirk wirkenden Anpreßdrucks ein sich von den Enden der Schlauchschelle zum SpannRuhepunkt hin vergrößernden Querschnitt aufweist.

Zur dichthaltenden Verbindung eines Rohrstutzens mit einem flexiblen Schlauch werdenö im allgemeinen Schlauchschellen verwendet. Um das Aufbringen und auch das Lösen einer solchen Schlauchschelle schnell herbeiführenzu können, verwendet man zweckmäßigerweise eine offene und mit innerer Spannkraft wirkende Bauform, wie sie z. B. aus der US-A 22 85 850 oder der GB-A-15 60 606 bekannt sind. Dabei weisen die Schauchschellen einen Spann-Ruhepunkt auf, der in etwa diametral zu den Enden der Schlauchschelle liegt. Von dem Spann-Ruhepunkt ausgehend verteilt sich die innere Spannkraft in Richtung zu den Enden hin, um so den erforderlichen Anpreßdruck hervorzurufen. Zum Aufbringen eines der artigen Gebildes auf seinen Wirkungsort wird ein dieses federnd auseinanderbiegendes Werkzeug benötigt.

In der Herstellung einfach sind Schlauchschellen, die aus einem offenen Drahtfederring in Form einer etwas mehr als eine Windung bildenden Spirale bestehen. Die offenen Drahtenden sind dabei so abgewinkelt, daß sich hieran leicht ein die innere Spannkraft überwindendes Werkzeug an setzen läßt.

Diese für einfache Ansprüche ausreichende und als allgemein bekannt anzusehenden Verbindungselemente haben jedoch den entscheidenden Nachteil, daß sie wegen ihres über die ganze Windung gleichbleibenden Querschnitts beim Aufbringen auf ihren Wirkungsort und auch während ihrer weiterhin mit innerer Spannkraft wirkenden Zweckerfüllung im Bereich des Spann Ruhepunktes eine größere Materialbeanspruchung und damit auch Ermüdung erfahren als an ihren offenen Enden. Damit läßt sich jedoch der durch die innere Federkraft zu erbringende Anpreßdruck für den Schlauch nicht über den ganzen Umfassungsbereich im gewünschten Maße konstant halten; er nimmt zwangsläufig vom Spann-Ruhepunkt zu den offenen Enden hin ab.

Um diesem Ubelstand abzuhelfen, hat man bereits aus einem Blech gebogene Schellen geschaffen und dieses Blech so mit Aussparungen ver sehen, daß sich zum einen beim geformten und gehärteten Blechring eine vom Spann-Ruhepunkt ausgehende Querschnittsminderung zu den offenen Ringenden hin ergibt und zum anderen im entspannten Zustand auch eine ausreichende Überlappung der offenen Ringenden erhältlich ist.

Den dieserart gebildeten Schlauchschellen haftet jedoch der Nachteil an, daß sie sich verhältnismäßig schlecht für eine Massenfertigung eignen, weil es sehr schwer ist, sie so zu gestalten und auch nach dem Härten in ihrer Gestaltung so zu halten, daß sie im Andruckzustand ihre für das Abdichten notwendige gleichmäßige Rundung aufweisen; außerdem sind mit dieser Gestaltungsform im Handel erhältliche Schlauchschellen zu beiden Seiten ihrer Andruckinnenfläche relativ scharfkantig gehalten, so daß hierüber eine Abscherkraft auf den anzupressenden Schlauch ausgeübt wird. Sind Rohrstutzen und darübergeschobener Schlauch Bestandteil einer Erschütterungen aufweisenden Maschine, dann sollte die den Schlauch an pressende Schelle so gestaltet sein und auch so in Form bleiben, daß der Anpreßdruck über den ganzen den Abdichtbezirk bildenden Schlauchumfang für eine lange Betriebsdauer möglichst konstant gehalten wird und daß auch keine zur Zerstörung führenden Nebenkräfte auftreten können.

Aufgabe der vorliegenden Erfindung ist es, eine Schlauchschelle der eingangs genannten Gattung derart auszubilden, daß bei einfacher Herstellungsweise eine hohen Anforderungen genügende Schelle zur Verfügung gestellt wird, bei der der Anpreßdruck innerhalb des durch die Schlauch schelle definierten Abdichtbezirks über den ganzen Schlauchumfang auch dann konstant gehalten wird, wenn eine Verwendung in Erschütterungen aufweisenden Anordnungen erfolgt. Ferner soll ein häufig zu Leckstellen führendes Einkerben bzw. Einschneiden in einen Schlauch ausgeschlossen sein.

Die Aufgabe wird erfindungsgemäß dadurch gelöst, daß zwei durch seitliche Abwinklungen von der Andruckinnenfläche gebildete vom SpannRuhepunkt zu den Enden hin sich verjüngende offene Spannkränze die Querschnittsänderung hervorrufen und daß der Ubergang von der Andruckinnenfläche zu der jeweiligen Abwinklung gerundet ist. Hiernach erhält eine den Schlauch umschließende Andruckinnenfläche ihr gleich mäßiges Andruckverhalten durch die Krafteinwirkung von den zwei die Andruckinnenfläche der Schelle in den äußeren Abmessungen übersteigenden Spannkränzen. Ausgestaltungen ergeben sich aus den Ansprüchen 2 bis 5.

Ferner besteht die Möglichkeit, daß jeder Spannkranz als für sich bestehendes Bauelement auf den die Andruckinnenfläche umfassenden Bereich federnd aufgebracht wird. Im letzten Fall kann diesen Dienst eine nach ihrer Art in der Patentschrift DE-C-540 229 beschriebene Bolzensicherung mit zur Überwindung der inneren Spannkraft außenliegenden Augen leisten.

Weitere Einzelheiten der Erfindung ergeben sich aus dem in der Zeichnung dargestellten Ausführungsbeispiel: Es zeigen.:

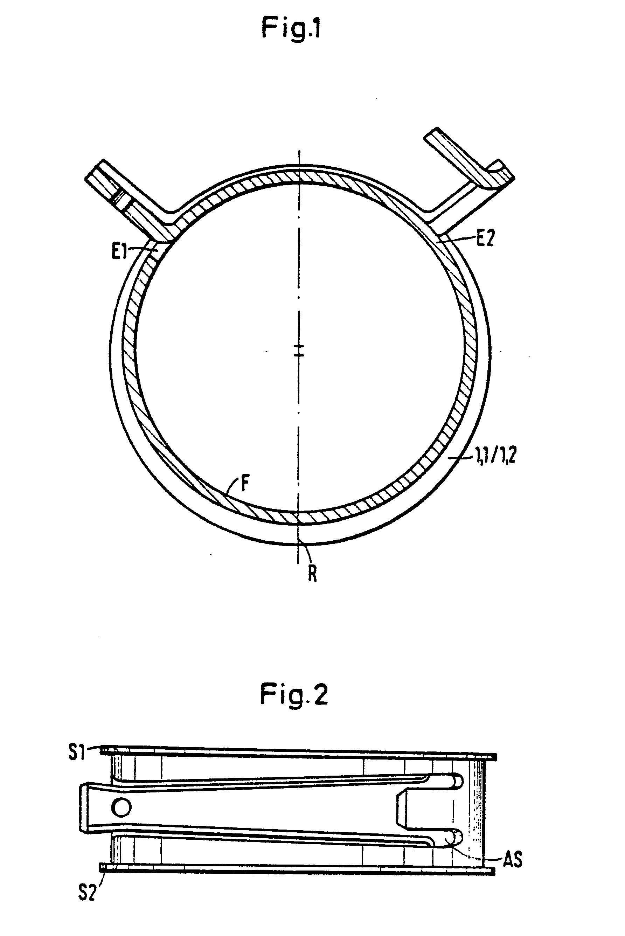

Fig. 1 eine Schlauchschelle in Seitenansicht und

Fig. 2 eine Schlauchschelle in Draufsicht.

Dargestellt ist eine aus einem relativ dünnen Blech geformte Schelle, bei der das Schellenmaterial zu beiden Seiten (1 1/1,2) des die Andruck innenfläche (F) bildenden Teils so abgewinkelt ist, daß senkrecht hierzu zwei Spannkränze (S 1/S 2) entstehen.

Der Zuschnitt des Materials und die Abwinklungen sind so vorgenommen, daß je Spannkranz, vom Spann-Ruhepunkt (R) ausgehend, zu den End punkten (E 1/E 2) hin die Überhöhung entsprechend der erforderlichen Spannkraftminderung abnimmt. Die Zeichnung zeigt deutlich, daß die Er

Das eine Ende (E 1) des so gebildeten flächig wirkenden offenen Federringes ist durch eine Aussparung (AS) des anderen Endes (E 2) geführt. Beide Enden sind zum Ansetzen eines Werkzeuges nach außen hin so abgewinkelt, daß gleichzeitig eine als bekannt vorauszusetzende Anschlag sperre für die maximal zulässige Auffederung entsteht. Als Schellenmaterial kann härtbares Federbandmaterial Verwendung finden. Als An wendungsgebiete kommen zum Beispiel Kühlsysteme von Wärmekraftmaschinen, wie im Automobilbau verwendet, in Frage.

**Patentansprüche**

1. Offene Schlauchschelle, die mittels eines die Spannkraft überwindenden Werkzeugs in ihre Wirkposition bringbar ist und die zur Erzielung eines auf den durch die Andruckinnenfläche (F) der Schlauchschelle definierten Abdichtbezirk wirkenden Anpreßdrucks ein sich von den Enden (E1, E2) der Schlauchschelle zum Spann-Ruhepunkt (R) hin vergrößernden Querschnitt aufweist, dadurch gekennzeichnet, daß zwei durch nach auß garidetet seitliche Abwinklungen der Andruckinnenfläche ge-bildete ,vom Spann-Ruhepunkt zu den Enden hin sich verjüngende offene Spannkränze (S1, S2) die Querschnittsänderung hervorrufen und daß der Übergang von der Andruckinnenfläche zu der jeweiligen Ab winklung gerundet ist.

2. Schlauchschelle nach Anspruch 1 dadurch gekennzeichnet, daß jeder Spannkranz (S1, S2) senkrecht von der Andruckinnenfläche (F) abgewinkelt ist.

3. Schlauchschelle nach zumindest Anspruch 1, dadurch gekennzeichnet, daß die Andruckinnenfläche F) sich an den beiden Schellenenden ( E1, E2) überlappt, wobei die Überlappung durch mindestens eine Aussparung (AS) an dem einen Schellenende (E 2) und eine diese Aus sparung füllende Verjüngung des anderen Schellenendes (E 1) erzielbar ist.

4. Schlauchschelle nach Anspruch 3, dadurch gekennzeichn et daß die Überlappung durch gegenläufige Abschrägung der Schellenenden (E1, E2) erzielt wird.

5. Schlauchschelle nach Anspruch I, dadurch gekennzeichnet, daß die beiden Schellenenden (E1, E2) in bekannter Weise eine das Ansetzen eines Werkzeuges ermöglichende Abwinklung aufweisen.

6.Schlauchschelle nach Anspruch 1, dadurch gekennzeichnet, daß jeder Spannkranz aus mindestens einem in Form eines handelsüblichen, in entsprechender Einbettung auf der Andruckinnenfläche ruhenden, an sich selbständigen Federring besteht.

**Claims:**

1. An open hose clamp which can be moved to its acting position by means of a tool overcoming the chucking power and which reveals a cross-section increasing from the ends (E1, E2) of the hose clama towards the clamping fulcrum (R) in order to achieve a contact pressure working on the defined sealing area through the contact pressure area (F) of the hose clamp, characterized . in that two open clamping rings (S1, S2), formed by protrusions angling off from said contact pressure area and tapering off from said clamping fulcrum towards said ends, produce said cross-section alteration and that the junction from said contact pressure area to the relevant angled protrusion is rounded.

2. Tube clamp according to Claim 1, characterized in that each of said clamping rings (SI, S2) is bent vertically from said contact pressure area (F).

3. Hose clamp according to at least Claim 1, characterized in that said contact pressure area (F) is overlapping on said two ends (E1, E2) of said hose clamp, whereby the overlapping is obtained by at least one opening (AS) in the one end (E2) of said hose clamp and a tapering on the other end (E1) of said hose clamp (E1) fitting in said opening.

4. A hose clamp according to Claim 3, characterized in that said overlapping is obtained by an opposite chamfering of said clamp ends (E1, E2).

5. A hose clamp according to Claim 1 characterized in that said two clamp ends (E1, E2) in known manner, are bent,up in order to make possible the placing of a tool.

6. A hose clamp according to Claim 1, characterized in that each clamping ring structure is composed of at least one independent spring ring of a design as customary in the trade, resting in appropriate imbedding on said contact pressure area.

**Revendications**

1. Collier de serrage ouvert, susceptible d'être amené à sa position fonctionnelle à l'aide d'un outil apte à vaincre la force de serrage, possedant une section agrandie à partir des extrémites (E1, E2) du collier de serrage dans la direction du point de repos (R) de la force de serrage, destinée à generer une pression exercée sur la zone de joint definie par la surface interieure de pression (F), caractérisé par le fait que deux parties latérales coudées vers l'extérieur de la surface interieure de pression, formant deux couronnes de serrage ouvertes (S1, S2), en cône à partir du point de repos de la force de serrage vers les extrémités, provoquent la modification de la section, et que la zone de transit de la surface intérieure de pression à la partie coudée correspondante est arrondie.

2. Collier de serrage d'apres la revendication 1, caractérisé par 1e fait que chaque couronne de serrage (S1, S2) est coudéen sens vertical par rapport à la surface intérieure de pression(F).

3. Collier de serrage d'apres la revendication 1, au moins, caractérisé par le fait que la surface . intérieure de pression (F) se revouvre aux deux extrémités (E1, E2) du collier, le recouvrement pou vant être réa1isé à l'aide d'au moins un évidement (AS) à une des extrémités (E 2) du collier, et d'un cône remplissant l'évidement dans l'autre extrémité (E 1) du collier.

4. Collier de serrage d'apres la revendication 3, caractérisé par le fait que le recouvrement est obtenu par un chanfrein opposé des extrémités (E1, E2) du collier.

5. Collier de serrage d'apres la revendication 1, caractérisé par le fait que de la façon connue, les deux extrémités (E1, E2) du collier comportent une partie coudée permettant l'application d'un outil.

6. Collier de serrage d'apres la revendication 1, caractérisé par le fait que chaque couronne de serrage se compose au moins d'une rondelle élastique, du type commercial, en principe amovible, placée dans un encastrement correspondant sur la surface intérieure de pression.

0 108 072

# Fig.1

# Fig.2

1